# EUROPEAN PATENT APPLICATION

(11) **EP 1 743 680 A1**
(43) Date of publication of application: **17.01.2007**
(21) Application number: 04821955.4
(22) Date of filing: 22.11.2004
(51) Int. Cl.: A63F 13/00

(54) **GAME SOFTWARE AND GAME DEVICE**

(30) Priority: 07.05.2004 JP 2004138832
(71) Applicant: Konami Corporation, Chiyoda-ku, Tokyo 100-6330 (JP)
(72) Inventor: Nojiri, Shinta, Konami Corporation, Minato-ku, Tokyo 106-6112 (JP); Kobayashi, Masayuki, Konami Corporation, Minato-ku, Tokyo 106-6112 (JP)
(74) Representative: Hengelhaupt, Jürgen
(86) International application number: PCT/JP2004/017339
(87) International publication number: WO 2005/107902

(57) **Abstract**

The invention is program having a routine for displaying two or more cards selectable by a player on a monitor in a first size, a routine for enlarging the card selected by the player in a second size bigger than the first size and displaying the enlarged card, a routine for searching and judging two or more commands which are defined on the selected card, and for producing an object attaching a behavior kind display corresponding to two or more commands defined so as to produce a command selection image and for displaying the command selection image with the selected card, a routine for detecting selection of which behavior kind display, of the command selection image corresponding to the selected card has been determined by the player, and a routine for executing only commands which correspond to the behavior kind display the selection of which has determined by the player, of the two or more commands which are defined on the selected card during a game

## Description

### TECHNICAL FIELD

This invention relates to game software and a game machine for executing a game wherein cards displayed on a monitor are used in order to instruct a character in the game to take an action.

A conception of "game software" in this specification is program itself and various kinds of data related, contingent to the program if necessary. But, "game software" is not always related to data, but always has program. And, "various kinds of data related" may be stored in memory means, such as a ROM disk, together with program, and furthermore, may be stored in an outside memory means so as to be freely read out through a communication medium means, such as the Internet.

### BACKGROUND ART

In such a conventional well-known card game, turns are repeated between an operation character operated by a player and a computer character operated by a CPU, and a player and a CPU instruct the characters in the game to take various kinds of actions with a hand in the respective turns.

Generally, a player and a CPU instruct the characters in a game to move or to attack an enemy/defense against an enemy with cards. In each turn, phases for giving such instructions, that is, move phase and attack/defense phase are set, being clearly differentiated from each other.

When thus dividing each turn into a plurality of phases, a player is easy to mistake a present phase for the move phase or the attack/defense phase, and then a player inclines to instruct to move in the attack/defense phase or to instruct to attack/defense in the move phase, and with such instructions by the player, each character in the game may take actions which are not expected by the player.

Besides, it is necessary to separately own a hand to be used in the move phase and a hand to be used in the attack/defense phase for a player, so that many hands are necessary to be prepared in order to increase a scope of choice of a player concerning move and attack/defense and to improve funs of the game. When displaying many numbers of hands in a limited display area of a monitor, but, a space for displaying another information, such as information of an image of a field where characters move and status information of characters, is restricted, so that the number of hand cards which a player owns once is also restricted. This problem is big in a portable game machine where the display area of a monitor is small.

The object of the invention is to provide game software and a game machine for precisely instructing to move and attack/defense even with a small number of hand cards, taking the above-mentioned circumstances into consideration.

### DISCLOSURE OF INVENTION

One aspect of the present invention is game software being operable to cause a computer (16) to execute a routine for proceeding with a game by causing a player to select a hand (35) which is displayed on a monitor (9) through input means (25, 26) so as to execute a command which is defined on said hand, comprising:
said game software having program causing said computer to execute the following routines:
   a card display routine, for displaying two or more cards (37) selectable by said player on said monitor in a first size;
   an enlargement display routine, for enlarging said card selected by said player in a second size which is larger than said first size and for displaying said enlarged card;
   a command selection image producing routine, for searching and judging two or more commands which are defined on said selected card, and for producing a behavior kind selection obj ect attaching behavior kind displays (PT1, PT2) corresponding to said two or more commands defined, and for producing a command selection image (CS) from said behavior kind selection object, and for displaying said command selection image together with said selected card;
   a determined selection judging routine, for detecting selection of which behavior kind display of said command selection image corresponding to said selected card has been determined by said player; and
   a command execution routine, for executing only command which corresponds to said behavior kind display the selection of which has determined by said player, of said two or more commands which is defined on said selected card during said game.

According to this aspect of the invention, the command selection image (CS) is displayed on the card selected by the player so as to display behavior kind displays (PT1, PT2) corresponding to two or more commands, so that the player immediately perceive that two or more commands are designated on the card so as to be freely selected from the command selection image (CS). And, the executed commands are only behavior kinds which were selected by the player from the command selection image (CS), thereby preventing the commands which the player does not expect from being executed. Then, the player can precisely instruct to move, attack and defense in various ways with the hand having a small number of cards.

Another aspect of the invention is the game software, wherein said game software has said program for further causing said computer to execute a command table producing routine, for storing a result of determined selection of said behavior kind display concerning said two or more cards which was detected by said determined selection judging routine in a memory (3), and for producing a command table (CTL), and said command execution routine executes corresponding commands in order on the basis of said result of determined selection concerning said two or more cards which are stored in said command table.

According to this aspect of the invention, the commands are executed in order on the basis of the behavior kinds which were selected concerning two or more cards stored in the command table (CTL), thereby effectively executing the commands.

Another aspect of the invention is a game machine (20) having means for proceeding with a game by causing a player to select a hand which is displayed on a monitor through input means so as to execute a command which is defined on said hand, comprising:
card display means , for displaying two or more cards selectable by said player on said monitor in a first size;
enlargement display means, for enlarging said card selected by said player in a second size which is larger than said first size and for displaying said enlarged card;
command selection image producing means, for searching and judging two or more commands which are defined on said selected card, and for producing a behavior kind selection object attaching behavior kind displays corresponding to said two or more commands defined, and for producing a command selection image from said behavior kind selection object, and for displaying said command selection image together with said selected card;
determined selection judging means, for detecting selection of which behavior kind display of said command selection image corresponding to said selected card has been determined by said player; and
command execution means, for executing only command which corresponds to said behavior kind display the selection of which has determined by said player, of said two or more commands which is defined on said selected card during said game.

According to this aspect of the invention, the command selection image (CS) is displayed on the card selected by the player so as to display behavior kind displays (PT1, PT2) corresponding to two or more commands, so that the player immediately perceive that two or more commands are designated on the card so as to be freely selected from the command selection image (CS). And, the executed commands are only behavior kinds which were selected by the player from the command selection image (CS), thereby preventing the commands which the player does not expect from being executed. Then, the player can precisely instruct to move, attack and defense in various ways with the hand having a small number of cards.

### BRIEF DESCRIPTION OF DRAWINGS

[Fig.1] Fig. 1 is a view showing appearances of a portable game machine.
[Fig.2] Fig.2 is a control block diagram of the game machine to which the invention is applied.
[Fig.3] Fig.3 is a view showing one of display forms on a monitor.
[Fig.4] Fig.4 is a flowchart showing one instance of command selection control with a hand.
[Fig.5.] Fig.5 is a view showing one instance of a command table stored in a memory.

### EXPLANATION OF REFERENCE NUMBERS

3... ...memory (RAM)
9... ...monitor
16... ...computer (main body of game machine)
20......game machine
25... ...input means (direction instructing switch)
26... ...input means (push button switch)
35... ...hand
37... ...card
CS... ...command selection image
PT1, PT2... ...behavior kind display
CTL... ...command table

### BEST MODE FOR CARRYING OUT THE INVENTION

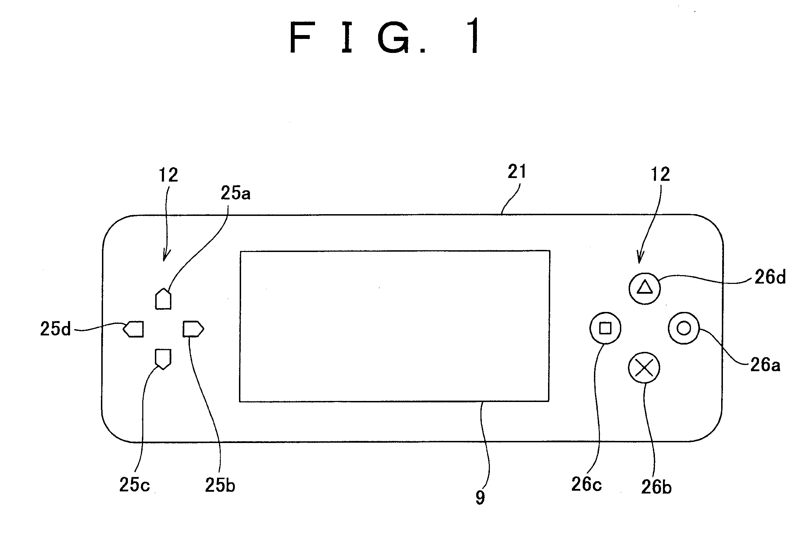

Fig.1 shows a portable game machine as a game machine comprising a computer. A portable game machine 20 has a main body 21, a reflective liquid crystal display 9 as a display unit attached to the main body 21, and an input operation portion 12, as shown in Fig. 1. The input operation portion 12 has a direction instructing switch 25 and a plurality of push button switches 26a, 26b, 26c, 26d. The direction instructing switch 25 has four operation members 25a, 25b, 25c, 25d as direction keys located in the shape of a cross in up/down and right/left hands, and outputs a signal corresponding to each operation member by selecting one from these operation members 25a, 25b, 25c, 25d and pushing it down.

A structure of such input operation portion 12 is well-known, so various transformations are possible. For instance, a seesaw key having a cross shape may be located in place of the operation members 25a, 25b, 25c, and 25d. The number of the operation members 25a, 25b, 25c, 25d and the push button switches 26a, 26b, 26c, 26d and their location may be changed in various forms. If it is not necessary to differentiate these keys from each other, it is referred to as the operation switch 25 or 26. And, the game machine 20 is provided with a power switch, an operation member for adjusting sound volume and the like, but these are omitted.

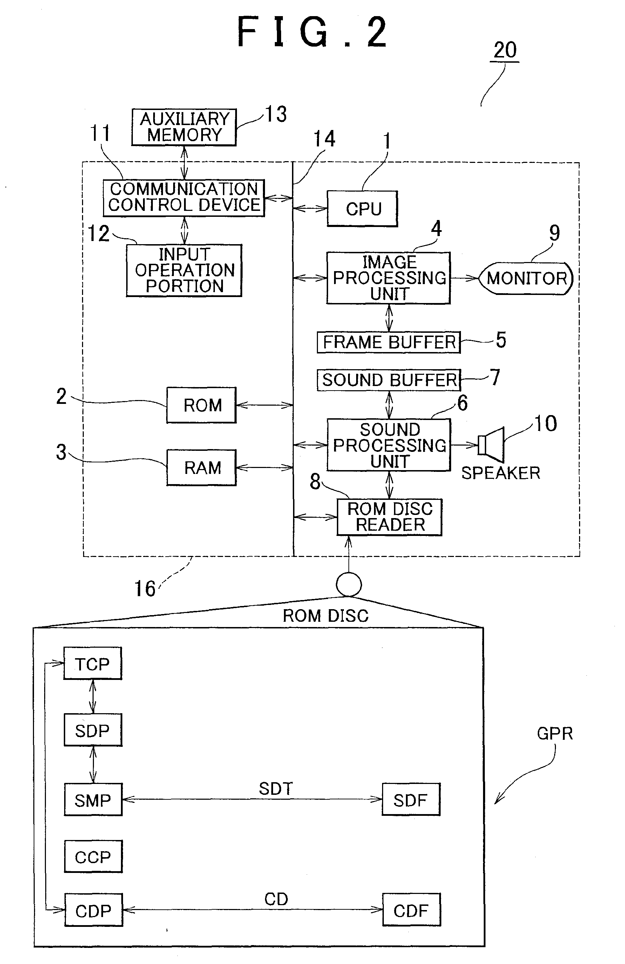

As shown in Fig. 2, a predetermined game is executed through the portable game machine 20 according to program for game, such as simulation game, which is stored in a ROM disc 15 as storage medium. The game machine 20 has a CPU 1, main body of which is a microprocessor, a ROM 2 and a RAM 3 as main memories of the CPU 1, an image processing unit 4 and a sound processing unit 6 and buffers 5, 7 of both units, and a ROM disc reader 8. An operating system which is program necessary for the whole operation controls of the game machine is written in the ROM 2. In the RAM 3, program and data for game which are read out of the ROM disc 15 as storage medium are written, if necessary. And, the image processing unit 4 receives image data from the CPU 1, and draws a game picture on the frame buffer 5, and converts the data of the drawn image into predetermined video regenerative signal, and outputs the signal to a monitor 9 with a predetermined timing. The sound processing unit 6 copies data of voice or sound, and data of sound source which are read out from the ROM disc 15 and stored in the sound buffer 7, and outputs through a speaker 10 which is built in the main body 21. The ROM disc reader 8 reads program and data which are stored in the ROM disc 15 according to an instruction from the CPU 1, and outputs a signal corresponding to the read contents. Program and data necessary for execution of the game are stored in the ROM disc 15.

A communication control device 11 is connected with the CPU 1 through a bus 14, and an input operation portion 12 as an input device is connected with the device 11, and an auxiliary memory 13 is attachably and detachably connected with the device 11 through a proper connection port. The communication control device 11 scans the state of the operation of the input operation portion 12 at predetermined cycles (at sixty cycles per second, for instance), and outputs the signal corresponding to the scanned result to the CPU 1. The CPU 1 judges the state of the operation of the input operation portion 12 on the basis of the signal.

The components in the above-mentioned structure excluding the ROM disc 15 and the auxiliary memory 13 are stored together in a predetermined housing so as to comprise a portable game machine body 16. This game machine body 16 functions as a computer.

Game program GPR through which a game proceeds according to a predetermined scenario, such as a simulation game, an action game, a role playing game, and an adventure game, is stored in the ROM disc 15.

In the portable game machine 20, the CPU 1 firstly executes a predetermined initialization process according to the program of the ROM 2 after a predetermined initialization operation (operation of turning the power on, for instance). When the initialization finishes, the CPU 1 starts to read the game software GPR which is stored in the ROM disc 15, and starts game processing according to the program. When a player executes a predetermined game start operation on the input operation portion 12, the CPU 1 starts various processing necessary for the execution of the game according to the routines of the game program GPR.

Thereafter, the game machine 20 executes predetermined processes according to the read game software GPR, and controls to display the picture on the monitor 9, and controls so that a predetermined scenario can proceed.

When loading program stored in the ROM disc 15 in the RAM 3 so as to execute by the CPU 1 in the game machine 20 having the above-mentioned structure, a player can play various kinds of games on a scope of the monitor 9.

One instance of a computer through which the game software according to the invention function is the portable game machine 20 which is a game machine for home use. But, the game machine 20 is not a machine dedicated for a game, but may be a machine through which a general storage medium for storing music and images can be replayed. Besides, the game machine 20 is any computer, such as a personal computer and a portable phone, through which the game software can function.

Various kinds of programs and various kinds of data comprising the game software GPR may be stored in any method as long as they can be read out by a program function of the game software GPR. As the present embodiment, they may be stored in the ROM disc 15 together with the program of the game software GPR. Otherwise, they may be stored in an outside memory means which is independent of the game machine 1, such as a server, and may be downloaded to a memory, such as the RAM 3, by the reading program in the game software GPR through communication medium means, such as the Internet.

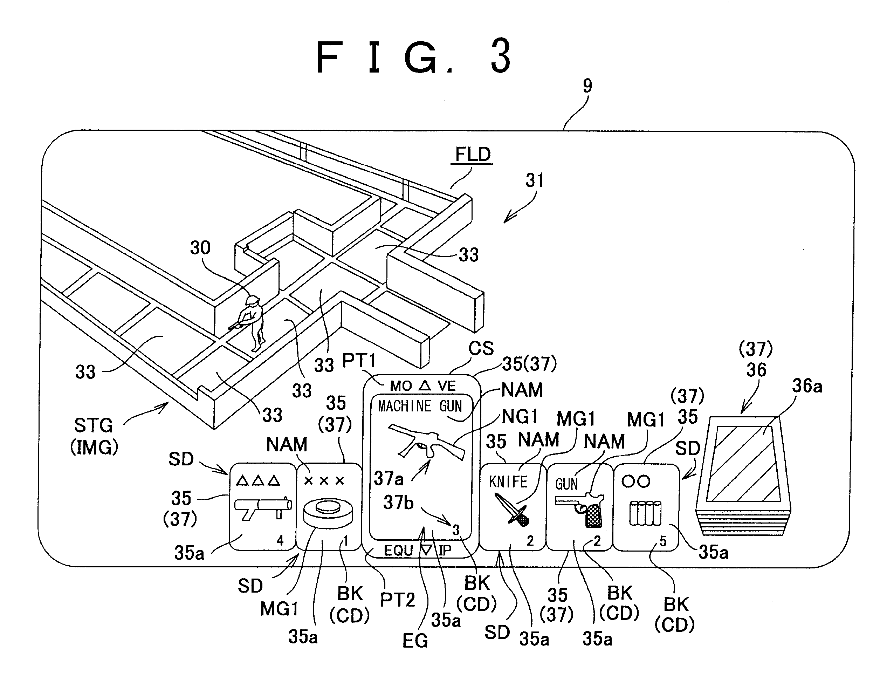

In a game according to the game software GPR, the game software GPR produces a field FLD in a three dimensional virtual space which is produced in the RAM 3 by the CPU 1, as shown in Fig.3. This game is a so-called action/simulation game wherein a player clears prepared stages in order, giving an attack/move instruction to an operation character 30 to be operated on the field FLD by the player on the field FLD in turns repeated by both the player and the CPU 1. The character 30 is comprised of a three dimensional polygon model which is formed with three dimensional polygons.

The game software GPR in Fig.2 shows only software elements comprising the game software GPR which are related to the invention. In fact, the game software GPR stores various program and data including ones shown in Fig.2 which are necessary for execution of the game with the game software GPR.

In the game, scenario develops according to scenario development program SDP which is a part of the game software GPR. The scenario development program SDP instructs stage producing program SMP to produce stage STG, where characters move for battle, in the field FLD set in a three dimensional virtual space 31 in the RAM 3 according to a scenario development, as shown in Fig.3.

Receiving this instruction, the stage producing program SMP reads stage producing data STD of a predetermined stage which is instructed to be produced by the scenario development program SDP out of a stage data file SDF of the game software GPR through the CPU 1, and produces the stage in the field FLD in the RAM 3. The stage data file SDF stores the stage producing data STD concerning production of two or more stages to be used in the game so as to be freely read out. Immediately the stage to be produced is instructed, the stage producing data STD necessary for production of the stage can be read out of the stage data file SDF.

The stage producing program SMP produces the stage STG for moving the characters in the three dimensional virtual space 31 on the basis of the stage producing data STD which was read out through the CPU 1 , and renders the stage STG with a virtual camera which is located at a proper position in the three dimensional virtual space 31, and displays the rendered on the monitor 9 as shown in Fig.3.

On an image IMG of the displayed stage STG, two or more blocks 33, which are move units where the character 30 in the game can move, are located and displayed, and each character in the game is controlled to be moved on the blocks 33 through the CPU 1 according to character control program CCP of the game software GPR in response to an instruction by the player through the input operation portion 12 or in response to an instruction by the CPU 1.

The monitor 9 displays the stage STG where a character is controlled to be moved, and a hand 35 comprised of a predetermined number of cards (the number can be properly set) owned by the player, facing the data showing side 35a. Besides, the monitor 9 displays a talon 36 which is comprised of a predetermined number of cards, hiding the data showing side 35a, that is, displaying a back side 36a. These cards are displayed in such a manner that card display program CDP of the game software GPR reads data concerning cards to be displayed out of a card data file CDF of the game software GPR through the CPU 1 so as to model the cards with a three-dimensional CG, and the modeled cards are located inside the three-dimensional virtual space 31 as objects.

Turn control program TCP of the game software GPR sets alternately turns, which are opportunities for instructing the character operable in the game to move, and attack/defense, for both the player and the CPU 1 through the CPU 1 , and receives the move instruction and the attack/defense instruction to be given to each character during the turn.

The turn control program TCP displays that the player's turn came on the monitor 9, and invites the player to input the instruction to be given to the character operation 30 operable by the player through the input operation portion 12. Receiving this invitation, the player instructs to draw a predetermined number of cards 37 out of the talon 36 so as to add to the hand 35 through the input operation portion 12, and the turn control program TCP produces an image showing that a predetermined number of cards 37 are drawn out of the talon 36 and are added to the hand 35, and display it on the monitor 9 through the CPU 1.

The RAM 3 stores data of the cards 37 comprising the talon 36 so as to correspond to orders in which the cards 37 are piled as the talon 36, and in response to the instruction of drawing a predetermined number of cards 37 out of the talon 36 of Fig.3, the turn control program TCP reads the data of the talon 36 which is stored in the RAM 3 in the orders of being piled, so that the program TCP can display the drawn cards as the hand 35 through the CPU 1.

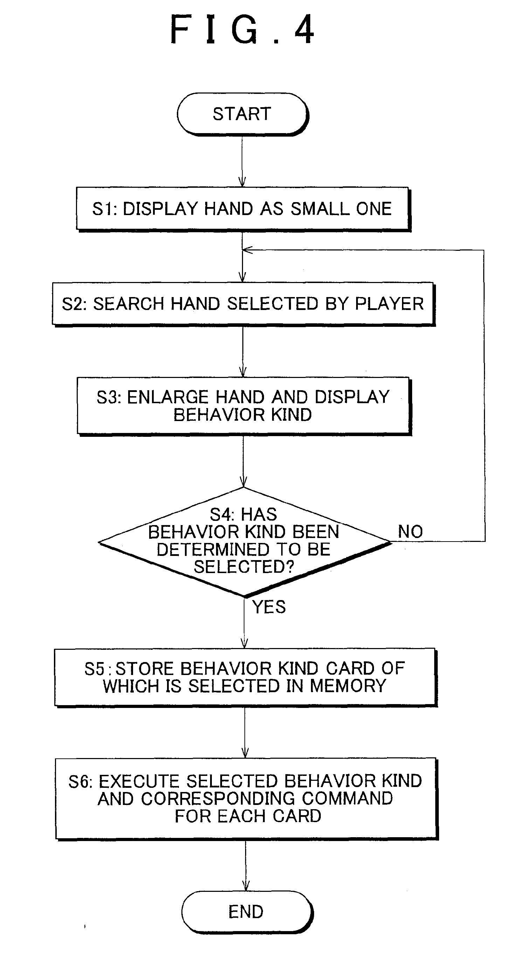

As the hand 35 owned by the player, for instance, six cards 37 are displayed facing the data showing side 35a, as shown in Fig.3. When not inputting an instruction of selection of cards concerning the hand 35 by the player through the input operation portion 12, the card display program CDP produces through the CPU 1 an object of the card concerning the hand 35 which is to be produced and located in the three-dimensional virtual space 31 as a small object, and locates therein. Then, an image SD displayed on the monitor 9 is small as shown in Fig.3 (step S1 of Fig.4).

As shown in Fig.3, each card 37 to be used in the game has an attack/defense data display portion 37a which shows data corresponding to contents of an attack/defense instruction when being instructed to attack/defense, and a move data display portion 37b which shows a number of blocks which the character in the game can move when being instructed to move. As a command for instructing a weapon to be used in the time of attack, an image MG1 of weapon and its name NAM are shown on the attack/defense data display portion 37a, and as a command for instructing distance to be moved when moving, a movable block number BK is shown with a numeral on the move data display portion 37b. The card data file CDF stores the contents of commands which are shown on the attack/defense data display portion 37a and the move data display portion 37b of each card 37 as command data CD corresponding to each card 37. The command data CD of the attack/defense data and the move data corresponding to each card 37 is immediately found when searching the card data file CDF.

As long as the player does not input a card selection instruction concerning the hand 35 through the input operation portion 12, the image SD to be displayed on the monitor 9 by the card display program CDP through the CPU1 is small as shown in Fig.3. In case of Fig.3, five cards are displayed as small ones. When the player moves a cursor (not shown) on the monitor 9 between two or more cards comprising the hand 35 with a proper operation of the input operation portion 12, one card to be selected by his (her) own can be selected from the hand 35.

The card display program CDP always watches through the CPU 1 the cards which the player selects with the input operation portion 12, and judges which card 37 the player presently selects through the input operation portion 12 (step S2 of Fig. 4). "Selection" in this case includes such a state that the player is properly moving a target, such as a cursor, and a flash target for flashing an image of card, on the selectable card through the input operation portion 12 when not determining selection of the card 37. Such a state is a provisional selection state where a target is provisionally located on a position corresponding to each card, and the selection is determined by operating the push button switch 26 for determining the selection at this time.

When the card 37 selected by the player was found, the card display program CDP processes to change the size of the object of the card which is located in the three dimensional virtual space 31 so as to become bigger than one in such a state that no card is selected through the CPU 1 and the image processing unit 4. Then, the thus enlarged object is displayed as a bigger enlarged image EG in place of the small image SD which has been displayed by rendering.

When enlarging the card 37 which was selected by the player through the input operation portion 12 and displaying the enlarged card 37 , the card display program CDP produces a behavior kind selection obj ect (which may be an object with a two-dimensional sprite) in the three-dimensional virtual space 31 by sticking an image corresponding to a command selection image CS described hereinafter on transparent plate polygons with a mapping, superimposing on the object of the enlarged card 37, and renders so as to display the command selection image CS on the monitor 9. The monitor 9 displays the behavior kind selection image CS, enclosing a periphery of the enlarged image EG of the enlarged card 37, so that the player can clearly perceive the card 37 selected by his (her) own by the behavior kind selection image CS (step S3 of Fig.4).

When setting the behavior kind selection object corresponding to the command selection image CS in the three dimensional virtual space 31, the card display program CDP judges a kind of the command which is defined on the card 37 selected by the player, that is, the behavior kind, by searching the card data file CDF, and sticks behavior kind displays PT1, PT2 corresponding to the kind of the defined command on the behavior kind selection object by mapping so as to execute modeling.

The behavior kind displays PT1, PT2 are produced and displayed at an upper portion and a lower portion on the behavior kind selection image CS, as shown in Fig. 3. The behavior kind display PT1 is displayed so as to correspond to selection of the move command, and the behavior kind display PT2 is displayed so as to correspond to selection of the attack/defense command. The card display program CDP invites the player through the CPU 1 to select any one of the behavior kind displays PT1, PT2 through the monitor 9 or the speaker 10.

Receiving this invitation, the player operates the input operation portion 12 so as to properly move a selection target, such as a cursor (not shown), between the behavior kind displays PT1 and PT2, and selects and instructs the behavior kind of the character which the player expects the character to do from now on, that is, the move behavior of the character or the attack/defense behavior of the character. Then, the player selects any one of the behavior kind displays PT1 and PT2 according to the command expected to be inputted, that is, according to the behavior kind of the character for which the player wants to use the selected card 37 , and executes an operation for determining the selection, such as the operation for pressing down the push button switch 26 through the input operation portion 12.

The behavior kinds of the character allotted to the card 37 are not always two kinds, the move behavior and the attack/defense behavior, but may be three or more kinds. That is, the number of the behavior kinds is selectable. Besides, the behavior kinds are not always "move" and "attack/defense" , but may be anyone, such as "assist", "reconnaissance", "bombing", and "instant move".

When expecting the character to move on the stage STG, the player determines the selection of the behavior kind display PT1, and instructs to use the card 37 as the card of the move command. When expecting the character to attack/defense, the player determines the selection of the behavior kind display PT2, and instructs to use the card 37 as the card of the attack/defense command.

The turn control program TCP always watches a state of selection of the behavior kind by the player through the input operation portion 12, and the player searches and judges the behavior kind of which card 37 of the cards 37 which are displayed as the hand 35 was determined to be selected at the time when a signal for determining the selection being inputted into the CPU 1 through the input operation portion 12 (step S4 of Fig.4).

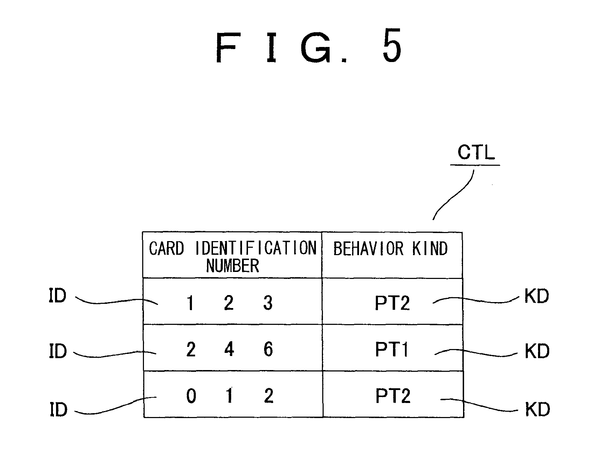

The turn control program TCP stores the selected behavior kinds concerning two or more cards 37 selected by the player during the turn and proper identification numbers ID appended on the respective cards in the RAM 3 as shown in a command table CTL of Fig.5 (step S5 of Fig.4).

After the player thus selected the behavior kinds for the respective cards of the hand having a predetermined number of cards and the command table CTL was stored in the RAM 3, the cards 37 which were selected from the hand having a predetermined number of cards by the player through the input operation portion 12 in order to instruct a character, and behavior kinds KD which were selected on the cards 37 are stored in the command table CTL in the shape of a table, as shown in Fig.5. Subsequently, the turn control program TCP gets the character through the CPU 1 to execute the behavior kinds of the respective cards 37 selection of which the player has determined and the commands set concerning the behavior kinds on the respective cards 37 in order on the basis of the command table CTL which is stored in the RAM 3 in order to proceed with the game (step S6 of Fig. 4). The behavior kind KD selection of which the player has determined is stored in the command table CTL as it is. Alternatively, a command corresponding to the selected behavior kind KD, which is defined on the card 37 may be found by referring to the card data file CDF, and the command may be stored in the command table CTL (indirect storing of the behavior kinds).

For instance, in case of Fig.5, the player determined the selection of the behavior kind display PT2 for the card having the card identification number ID "123", so that the turn control program TCP reads the command data CD concerning "attack/defense" corresponding to the behavior kind display PT2 the card identification number of which is "123" out of the card data file CDF, and executes the attack/defense command which is defined on the command data CD. In case of the card 37 which is displayed in an enlarged state in Fig.3, the turn control program TCP executes the command for attacking an enemy character through the CPU 1 with a weapon which is stored corresponding to "attack/defense" of the card data file CDF (the weapon corresponding to the image MG1 of the weapon which is displayed on the attack/defense data display portion 37a of the card 37 and its name NAM).

And, concerning the card having the card identification number ID "246" of Fig.5, the selection of the behavior kind display PT1 has been determined as the behavior kind, so that the turn control program TCP reads the command of "three blocks move", for instance which is the command data CD concerning "move" which corresponds to the behavior kind display PT1 of the card identification number "246" out of the card data file CDF, and execute the command.

In case of the card identification number ID "012", the selection of the behavior kind display PT2 has been determined as the behavior kind, so that similar to the card 37 having the card identification number ID "123", the turn control program TCP reads the command data CD concerning "attack/defense" which corresponds to the behavior kind display PT2 of the card identification number ID "012" out of the card data file CDF, and execute the attack/defense command which is defined on the command data CD (the concrete contents of the attack/defense is different from one of the card having the card identification number ID "123" since it depends on the command data CD concerning each card.).

Each card 37 is thus displayed on the monitor 9 such that the player can select one of two or more behavior kinds which are set for each card 37. Then, the player can freely select and determine one of two ore more behavior kinds, thereby instructing the character to execute various kinds of behaviors with one card.

In the above-mentioned embodiment, the CPU 1 comprises a game control unit, and the combination of the CPU 1 and specific software comprises various kinds of means of the game control unit, but at least a part of these means may be replaced by a logical circuit. Besides, the invention may be comprised as variously scaled game systems in addition to a game system for home use.

### INDUSTRIAL APPLICABILITY

The invention can be utilized as electronic game equipment using a computer, and software of amusement for getting a computer to execute.

## Claims

1. Game software being operable to cause a computer to execute a routine for proceeding with a game by causing a player to select a hand which is displayed on a monitor through input means so as to execute a command which is defined on said hand, comprising:
said game software having program causing said computer to execute the following routines:
a card display routine, for displaying two or more cards selectable by said player on said monitor in a first size;
an enlargement display routine, for enlarging said card selected by said player in a second size which is larger than said first size and for displaying said enlarged card;
a command selection image producing routine, for searching and judging two or more commands which are defined on said selected card, and for producing a behavior kind selection object attaching behavior kind displays corresponding to said two or more commands defined, and for producing a command selection image from said behavior kind selection object, and for displaying said command selection image together with said selected card;
a determined selection judging routine, for detecting selection of which behavior kind display of said command selection image corresponding to said selected card has been determined by said player; and
a command execution routine, for executing only command which corresponds to said behavior kind display the selection of which has determined by said player, of said two or more commands which is defined on said selected card during said game.

2. The game software according to claim 1, wherein said game software has said program for further causing said computer to execute a command table producing routine, for storing a result of determined selection of said behavior kind display concerning said two or more cards which was detected by said determined selection judging routine in a memory, and for producing a command table, and said command execution routine executes corresponding commands in order on the basis of said result of determined selection concerning said two or more cards which are stored in said command table.

3. Game machine having means for proceeding with a game by causing a player to select a hand which is displayed on a monitor through input means so as to execute a command which is defined on said hand, comprising:
card display means, for displaying two or more cards selectable by said player on said monitor in a first size;
enlargement display means, for enlarging said card selected by said player in a second size which is larger than said first size and for displaying said enlarged card;
command selection image producing means, for searching and judging two or more commands which are defined on said selected card, and for producing a behavior kind selection object attaching behavior kind displays corresponding to said two or more commands defined, and for producing a command selection image from said behavior kind selection object, and for displaying said command selection image together with said selected card;
determined selection judging means, for detecting selection of which behavior kind display of said command selection image corresponding to said selected card has been determined by said player; and
command execution means, for executing only command which corresponds to said behavior kind display the selection of which has determined by said player, of said two or more commands which is defined on said selected card during said game.
